(19) Europäisches Patentamt
European Patent Office
Office européen des brevets

(11) EP 0 856 567 A2

(12) EUROPEAN PATENT APPLICATION

(43) Date of publication:
**05.08.1998 Bulletin 1998/32**

(51) Int. Cl.[6]: **C09D 167/00**, C08G 63/668, B05D 7/00

(21) Application number: **98300697.4**

(22) Date of filing: **30.01.1998**

(84) Designated Contracting States:
**AT BE CH DE DK ES FI FR GB GR IE IT LI LU MC NL PT SE**
Designated Extension States:
**AL LT LV MK RO SI**

(30) Priority: **30.01.1997 JP 16981/97**
**07.02.1997 JP 25536/97**
**08.04.1997 JP 89547/97**

(71) Applicant:
**MITA INDUSTRIAL CO. LTD.**
**Chuo-ku , Osaka 540 (JP)**

(72) Inventors:
- **Ishihara, Takahiro**
**Tamatsukuri, Chuo-ku, Osaka 540 (JP)**
- **Horikami, Norio**
**Tamatsukuri, Chuo-ku, Osaka 540 (JP)**
- **Kubo, Masahiko**
**Nara-shi (JP)**

(74) Representative:
**Cresswell, Thomas Anthony**
**J.A. KEMP & CO.**
**14 South Square**
**Gray's Inn**
**London WC1R 5LX (GB)**

# (54) A transparent powder paint and a method of forming a coated film toned by using the above powder paint

(57) The transparent powder paint of this invention is obtained by dispersing various coloring agents in the polyester resin. The polyester resin is obtained especially by polycondensing (i) a diol component of the following general formula (1):

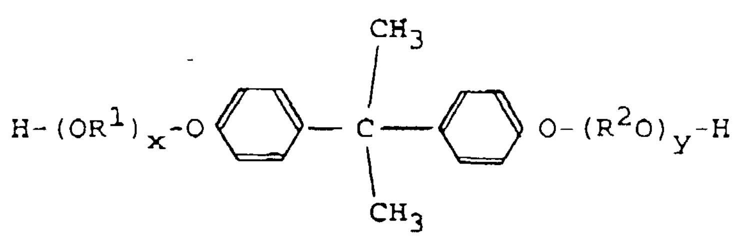

(1)

wherin each of $R^1$ and $R^2$ represents a lower alkylene group, and each of x and y is 0 or an integer of at least 1, and x + y represents an integer of 1 to 7,

(ii) a dicarboxylic acid, and (iii) a polycarboxylic acid having at least three valences or a polyhydric alcohol having at least three valences, the polyester resin having a ratio of a hydroxyl value (OHV) to an acid value (AV), OHV/AV, of at least 1.2. The transparent powder paint can give a coated film having toned vivid colors.

EP 0 856 567 A2

## Description

BACKGROUND OF THE INVENTION

1. Field of the Invention

This invention relates to a transparent powder paint which can realize a vivid coloration and a method of forming a coated film toned by using the above powder paint.

2. Description of the Prior Art

The powder paint is a solventless powdery paint obtained by melt-kneading a coloring agent, etc. with a binder resin composed of a polymer such as polyethylene, and granulating the resulting mixture, and it has been widely used recently for coating household electric products or architectural materials.

Since the powder coating is carried out without using a solvent, this coating operation is easier than the coating operation using a solvent-type coating agent and is safer in the working environment than the coating operation using a solvent-type coating agent which is performed by a dipping method or a spraying method. This method also has an advantage in that the powder paint can be recovered and used again to give a high utilization efficiency.

However, coating with a powder paint is carried out by charging particles of the powder paint with corona discharging in a fluidized bed, electrostatically deposing the charged paint particles to a material to be coated which is charged to an opposite polarity, and then heating and melting the paint particles deposited on the surface of the material to be charged. Accordingly, the powder paint has a defect that a color change is difficult.

Furthermore, since pigments are normally used as a coloring agent for the powder paint, the transparency of the powder paint is extremely low As a result, it is difficult to form a coated film utilizing the groundwork of the material to be coated and having a metal luster, or when a plurality of paints are blended together for toning purposes in order to obtain a desired color, the resulting color becomes mottled or a vivid color cannot be obtained

As a powder paint from which the above defect has been remedied, Japanese Laid-Open Patent Publication No. 183916/1996 proposes a powder paint having transparency.

In a powder paint having no transparency, in order to obtain a vivid hue of color, the amount of the pigment is prescribed as about 2 to 5 parts by weight per 100 parts by weight of the resin. On the other hand, in hitherto known transparent powder paints, the amount of a pigment to be compounded is as small as 0.01 to 0.5 part by weight per 100 parts by weight of the resin. As a result, the hitherto known transparent powder paints do not give a sufficient coloration, and for example, when a coated film utilizing the groundwork of the material to be coated is formed, there is a problem in that a coated film having a vivid color cannot be obtained. Furthermore, when at least two types of transparent powder paints having different colors are dry-blended to obtain a toned transparent powder coating composition and a coated film is formed from this composition by an electrostatic coating method, a uniformly toned coated film cannot be obained, a mottled pattern is formed in the coated film, or a coated film having an expected color or a color tone anticipated from the mixing ratio of the pigments cannot be obtained. This tendency is especially marked when a black-type powder paint containing carbon black and a powder paint of another color are mixed.

SUMMARY OF THE INVENTION

Accordingly, it is an object of this invention to provide a transparent powdery paint having sufficient transparency which can give a coated film having a vivid hue of color.

Another object of this invention is to provide a method of forming a coated film having a vivid color using a transparent powder Paint, especially to provide a method of forming a coated film having a toned vivid color using at least two types of a transparent powder paint.

According to this invention, there is provided a transparent powder paint comprising

(A) a polyester resin having a ratio of a hydroxyl value (OHV) to an acid value (AV), OHV/AV, of at least 1.2, said polyester resin being obtained by polycondensing

(i) a diol component expressed by the following general formula (1):

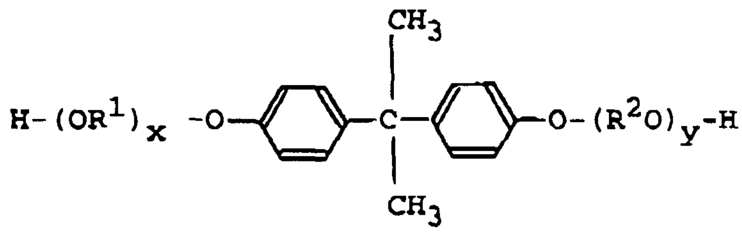

(1)

wherein each of $R^1$ and $R^2$ represents a lower alkylene group having 1 to 6 carbon atoms, each of x and y is 0 or an integer of at least 1, and x + y is an integer of 1 to 7,

(ii) a dicarboxylic acid, its acid anhydride or its ester of a lower alkyl group having 6 carbon atoms or less, and

(iii) a polycarboxylic acid having at least three valences, its acid anhydride, an ester of a lower alkyl group having 6 carbon atoms or less, or a polyhydric alcohol having at least three valences, and

(B) a coloring agent dispersed in the polyester resin.

According to this invention, there is provided a method comprising dry-blending at least two transparent powder paints having different colors, and forming a toned coated film by electrostatic coating with the resulting blend.

In such a method, when the electric conductivity of one transparent powder paint is 1, it is preferred that another transparent powder paint to be blended with the above powder paint should have an electric conductivity of 0.5 to 2.

According to this invention, there is provided a method of forming a toned coated film which comprises successively coating at least two transparent powder paints overlappingly on the surface of a material to be coated to give a coated film. In this method, three types of transparent powder paints giving colors of magenta, yellow and cyan are successively coated in overlapping layers on the surface of the material to form a coated film.

According to this invention, there is also provided a method which comprises dry-blending an opaque powder paint with a transparent powder paint having a different color, and preparing a toned coated film by electrostatic coating the resulting mixture. In this case, the transparent powder paint used should have a particle diameter having 1/2 or below of the opaque powder paint.

Furthermore, according to this invention, there is provided a coating method which comprises applying an opaque powder paint to the surface of a material to be coated, and further applying a transparent powder paint having a different color on the applied opaque powder paint in an overlapping layer to form a toned coated film.

## Brief Description of the Drawings

Fig. 1 is a view showing a method of forming a coated film toned with a mixture of an opaque powder paint and a transparent powder paint having a different color from the opaque powder paint.

Fig. 2 is a view showing a method of forming a coated film which comprises applying an opaque powder paint to the surface of a material to be coated, and further applying a transparent powder paint having a different color on the applied coating in an overlapping layer.

Fig. 3 is a view of an appratus for measuring the charged amount of the powder paint used in Example.

Figs. 4 to 6 are diagrams showing the charged amount distribution curves of transparent powder paints prepared in Examples 7 to 9, and Comparative Examples 10 to 12.

## DETAILED DESCRIPTION OF THE INVENTION

(transparent powder paints)

-Binder Resins-

As the binder resin, it is very important in this invention that polyesters which are obtained by polycondensing (i) the diol component represented by the before-mentioned general formula (1), (ii) the dicarboxylic acid, its acid anhydride or the lower alkyl ester therof, and (iii) the polycarboxylic acid having at least three valences, its acid anhydride, the lower alkyl ester thereof, or the polyhydric alcohol having at least three valences should be used. This polyester resin has excellent transparency, and excellent dispersibility in the below-mentioned coloring agents, especially copper phathalocyanine pigments, quinacridone pigments and bisazo pigments. As a result, the transparent powder paints

used in this invention have sufficient trasparency and show vivid colors.

In this polyester resin, the ratio between the hydroxyl value (OHV) and the acid value (AV): namely. OHV/AV should be at least 1.2, preferably 1.2 to 50, most preferably 2 to 40. If this ratio is smaller than 1.2, the acid group at the terminal of molecule becomes large, and the polyester resin is not melted completely at a certain temperature. Accordingly, the minimum melting temperature becomes high, the powder paint has low flowability, and it is difficult to obtain a coated film having a uniform thickness.

The acid value (AV) is suitably about 5 to 60 KOH mg/g. The hydroxl value (OHV) is suitably about 10 to 1000 KOH mg/g. The acid group value (AV) and the hydroxyl group value (OHV) are measured in accordance with the method described in JIS K 0211.

In the above-mentioned polyester resin, with respect to the diol component expressed by the general formula (1), examples of the lower alkylene group represented by $R^1$ and $R^2$ include methylene, ethylene, trimethylene, propylene, tetramethylene, ethylethylene, pantamethylene and hexamethylene groups having 1 to 6 carbon atoms. Further, x + y in the general formula (1) is an integer of 1 to 7, especially 3 to 5. If this value exceeds 7, the molecular weight of the diol component becomes too large, and the resulting coated film has lowered transparency.

Specific examples of the diol component expressed by the general formula (1) include polyoxypropylene(2.2)-2,2-bis(4-hydroxyphenyl)propane, polyoxypropylene(3.3)-2,2-bis(4-hydroxyphenyl)propane, polyoxyethylene(2.0)-2,2-bis(4-hydroxyphenyl)propane, polyoxypropylene(2)-polyoxyethylene(2)-2,2-bis(4-hydroxyphenyl)propane and polyoxypropylene(6.0)-2,2-bis(4-hydroxyphenyl)propane.

So long as the excellent transparency and dispersibility of the polyester resin are not impared, diols other than the diol component of the general formula (1) may be used. Examples of such other diols include hydroquinone, ethylene glycol, diethylene glycol, triethylene glycol, 1,2-propylene glycol, 1,3-propylene glycol, 1,4-butanediol, neopentyl glycol, 1,4-butenediol, 1,5-pentanediol, 1,6-hexanediol, bisphenol A and hydrogenated bisphenol A. Generally, these other diol components may be used in an amount of 10 mole% or less based on the total alcohol component.

Examples of the dicarboxylic acid (ii) to be polycondensed with the diol component (i) include oxalic acid, malonic acid, succinic acid, itaconic acid, glutaconic acid, adipic acid, maleic acid, fumaric acid, citraconic acid, mesaconic acid, azelaic acid, sebacic acid, cyclohexanedicarboxylic acid, phthalic acid, isophthalic acid and terephthalic acid. These dicarboxylic acids may be an acid anhydride, or a lower alkyl ester thereof. Examples of the lower alkyl groups may include methyl, ethyl, n-propyl isopropyl, n-butyl, isobutyl, sec-butyl, t-butyl, n-pentyl and n-hexyl groups containing 1 to 6 carbon atoms.

Examples of the polycarboxylic acid having at least three valences, its acid anhydride or its lower alkyl ester (the component (iii)) to be polycondensed with the components (i) and (ii) include trimellitic acid, 2,5,7-naphthalenetricarboxylic acid, 1,2,4-naphthalenetricarboxylic acid, 1,2,4-butanetricarboxylic acid, 1,3-dicarboxyl-2-methyl-2-methoxycarbonylpropane, tetra(methoxycarbonyl)methane and 1,2,7,8-octanetetracarboxylic acid. Furthermore, examples of the polyvalent alcohols having at least three valences of (iii) include glycerin, 2-methyl-1,2,3-propanetriol, 1,2,4-butanetriol, 2-methyl-1,2,4-butanetriol, 1,2,5-pentatriol, pentaerythritol, dipentaerythritol, tripentaerythritol, hexytol, sorbitol, 1,4-sorbitan and 1,2,4-benzenetriol.

The carboxylic acid and alcohol having at least three valences as component (iii) are used to adjust the acid value and hydroxyl value of the polyester resin to the aforementioned ranges and to make the polyester resin have a three-dimensional network structure. Usually, the component (iii) is used in a proportion of about 5 to 60 mole% based on the total carhoxylic acid component.

The polycondensation of the components of (i), (ii) and (iii) is carried out at a temperature of 180 to 25°C, for example, in an atmosphere of an inert gas. Of course, in order to promote this reaction, the reaction may be carried out by using an esterification catalyst such as zinc oxide, stannous oxide, di-n-butyl tin oxide and dibutyl tin dilaurate, and the reaction may be carried out under reduced pressure.

In this invention, together with the above-mentioned polyester resins, other various known resins may be used. Typical examples of such resins are styrene-type resins and acrylic resins. Specific examples of the styrene-type resins include polystyrene, chloropolystyrene, poly-α-methylstyrene, a styrene-chlorostyrene copolymer, a styrene-propylene copolymer, a styrene-butadiene copolymer, a styrene-vinyl chloride copolymer, a styrene-vinyl acetate copolymer, a styrene-acrylate copolymer, a styrene-methacrylate copolymer, a styrene-methyl-α-chloroacrylate copolymer and a styrene-acrylonitrile-acrylate copolymer. Specific acrylic resins include homopolymers and copolymer of (meth)acrylic monomers such as acrylic acid, methyl acrylate, ethyl acrylate, butyl acrylate, octyl acrylate, phenyl acrylate methacrylic acid, methyl methacrylate, ethyl methacrylate, butyl methacrylate, octyl methacrylate phenyl methacrylate, and methyl α-chloroacrylate. Furthermore, resins other than the styrene-type resins and the acrylic resins include polyvinyl chloride, low molecular weight polyethylenes, low molecular weight polypropylene, an ethylene-ethyl acrylate copolymer, polyvinylbutyral, an ethylene-vinyl acetate copolymer, a rosin-modified maleic acid resin, phenol resins, epoxy resins, ionomer resins, polyurethane resins, silicone resins, ketone resins, xylene resins and polyamide resins. The amounts of the above resins other than the polyester resins should be limited to those which do not impair the excellent transparency and dispersibility of the polyester resins, and usually they should be limited to 30% by weight or less,

especially 1 to 30% by weight.

The above-mentioned binder resins used in this invention preferably have a glass transition temperature of 40 to 80°C. If the above binder resins have a glass transition temperature of lower than the above range, the resulting powder paint has poor storage stability. If the above binder resin has a higher glass transition temperature, the ability of forming a coated film will be adversely affected.

-Coloring Agents-

As the coloring agents, cyan-type coloring agents, magenta-type coloring agents, yellow-type coloring agents and black-type coloring agents may be used according to a desired color. At least two coloring agents may be combined so that the desired color hue will be developed. The amount of these coloring agents may be adjusted to 1 to 20 parts by weight, preferably 2 to 10 parts by weight, per 100 parts by weight of the binder resin. If the amount of the coloring agent is smaller than the above range, the color becomes paler and it is impossible to obain the desired vivid color hue. On the other hand, if the amount is larger than the above range, the transparency of the paint is likely to be lowered.

(a) Cyan-type coloring agents

As the cyan-type coloring agents, copper phthalocyanine pigments expressed by general formula (2):

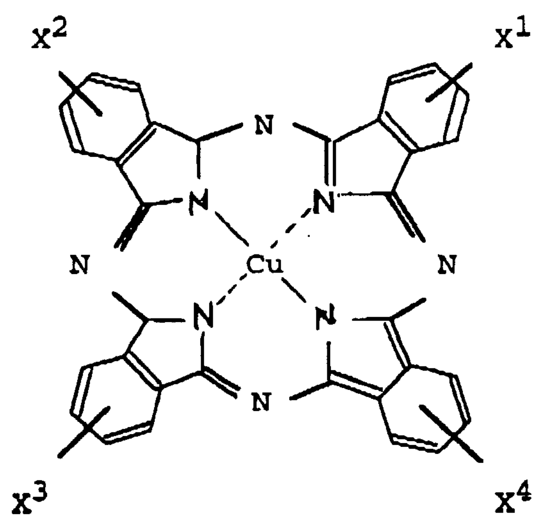

(2)

wherein $X^1$, $X^2$, $X^3$ and $X^4$ respectively represent a hydrogen atom, a group of formula (3) or (4):

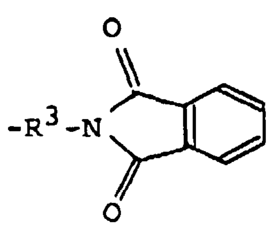

(3)

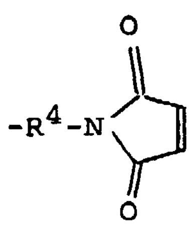

(4)

wherein $R^3$ and $R^4$ each represent an alkylene group having 1 to 5 carbon atoms, and at least one of $X^1$, $X^2$, $X^3$ and $X^4$ represent a group expressed by formula (3) or (4)

are especially preferred. In the group $R^3$ or $R^4$ contained the substituents shown by formula (3) or (4), the lower alkylene

group has 1 to 5 carbon atoms. Specific examples of the alkylene group include methylene, ethylene, trimethylene, propylene, tetramethylene, ethylethylene and pentamethylene. Preferred examples of groups (3) and (4) containing such an alkylene group are the groups (3-1), (3-2), (4-1) and (4-2) shown below.

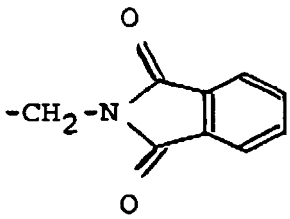
(3-1)

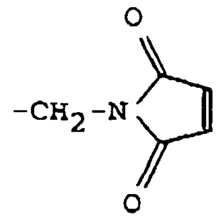
(4-1)

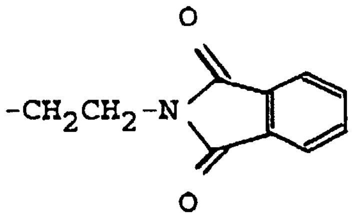
(3-2)

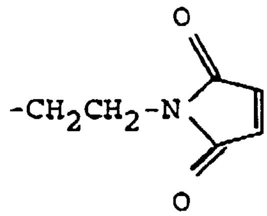
(4-2)

The copper phthalocyanine pigments expressed by general formula (2) contain at least one substituent (3) or (4). Generally, these pigments contain 1 to 4, preferably 2 to 4, substituents. Incidentally, the positions of the substituets (3) and (4) are not particularly limited.

The most preferred copper phthalocyanine pigment is shown by the following formula (2-1).

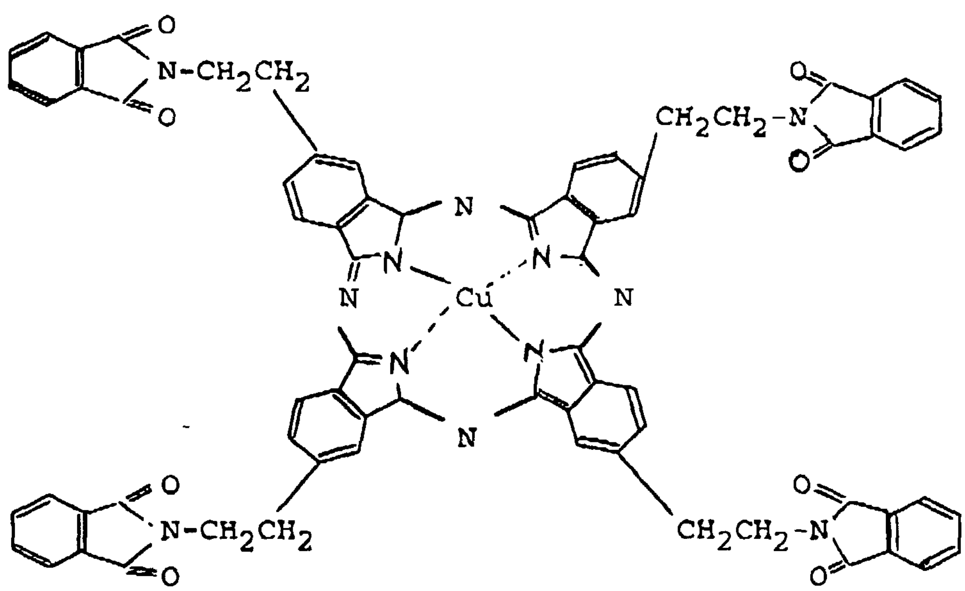
(2-1)

(b) Magenta-type coloring agents

A quinacridone pigment is preferred as the magenta-type coloring agent. A quinacridone pigment expressed by general formula (5):

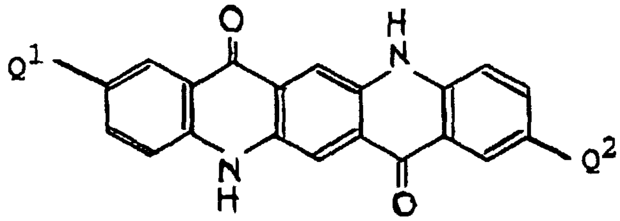

(5)

wherein $Q^1$ and $Q^2$ represent a hydrogen atom, an alkyl group or an alkoxyl group, and at least one of $Q^1$ and $Q^2$ represents an alkyl group or an alkoxyl group,

is preferred.

In the general formula (5), the alkyl group and alkoxyl group corresponding to the substituents $Q^1$ and $Q^2$ has 1 to 6 carbon atoms, and examples of such an alkyl group and alkoxyl group include methyl, ethyl, n-propyl, isopropyl, n-butyl, isobutyl, sec-butyl, t-butyl, n-pentyl, n-hexyl, methoxy, ethoxy, n-propoxy, isopropoxy, n-butoxy, t-butoxy, n-pentyloxy, and n-hexyloxy groups.

Specific examples of the quinacridone pigments expressed by the general formula (5) include C.I. Pigment Violet 122 (both $Q^1$ and $Q^2$ represent a methyl group) and C.I. Pigment Violet 192 ($Q^1$ is a methyl group and $Q^2$ is a hydrogen atom).

(c) Yellow-type coloring agents

Preferred examples of the yellow-type coloring agents include acetoacetic acid allylide disazo pigment, benzimidazolon pigment, isoindoline pigment and fused azo pigment.

Among these examples, acetoacetic acid allylide disazo pigment can be expressed by the following general formula (6):

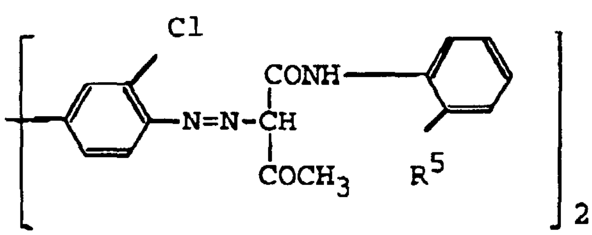

(6)

wherein $R^5$ represents a hydrogen atom, an alkyl group or an alkoxy group.

In the general formula (6), the alkyl group and the alkoxyl group corresponding to $R^5$ may include groups having 1 to 6 carbon atoms as illustrated with respect to the substituents $Q^1$ and $Q^2$. Specific examples of the acetoacetic acid allylide disazo pigment are C.I. Pigment Yellow 17 ($R^5$ is a methoxy group), C.I. Pigment Yellow 12 ($R^5$ is a hydrogen atom) and C.I. Pigment Yellow 14 ($R^5$ is a methyl group).

An example of the benzimidazolon pigment is C.I. Pigment Yellow 154 expressed by the formula (7).

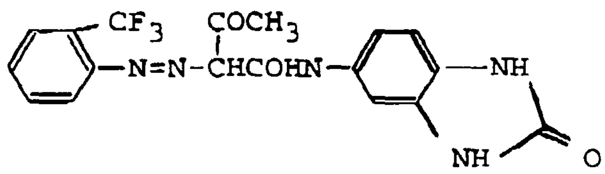

(7)

An example of the isoindoline pigment may be C. I. Pigment Yellow 109 expressed by the following formula (8) shown below.

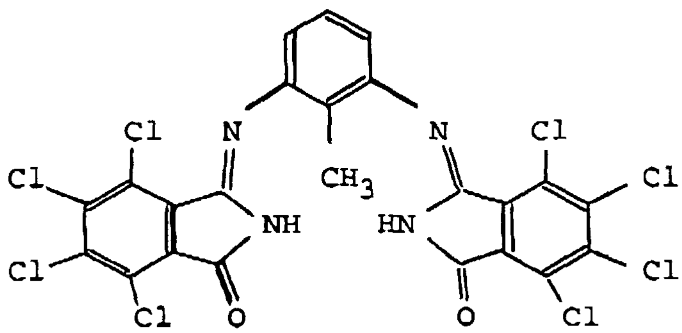

(8)

An example of the fused azo pigment may be C. I. Pigment Yellow 93 expressed by the following formula (9).

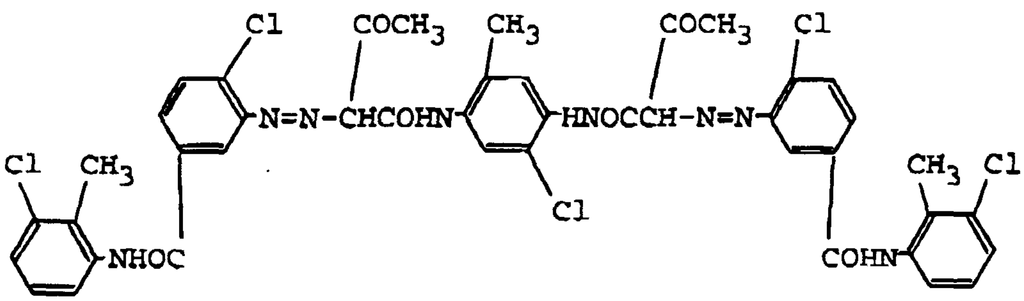

(9)

In addition to the above-mentioned examples, acetoacetic acid allylide monoazo pigments expressed by the following formula (10):

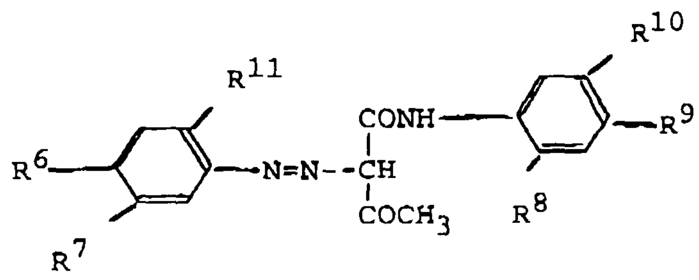

(10)

wherein $R^6$ represents a halogen atom, an alkyl group, an alkoxyl group, a nitro group, an aryl-substituted sulfamoyl group, or a sulfo group substituted by Ca, Ba, Mn or Sr, and each of $R^7$, $R^8$, $R^9$ and $R^{10}$ represents a hydrogen atom, a halogen atom, an alkyl group or an alkoxyl group, and $R^{11}$ represents an alkyl group, an alkoxyl group or a nitro group,

such as C.I. Pigment Yellow 1, C.I. Pigment Yellow 3, C. I. Pigment Yellow 65, C.I. Pigment Yellow 73, C.I. Pigment Yellow 74, C.I. Pigment Yellow 97, C. I. Pigment Yellow 98, C.I. Pigment Yellow 130, C.I. Pigment Yellow 133, C. I. Pigment Yellow 133 and C. I. Pigment Yellow 169 may be used.

Yellow-type coloring agents most preferably used in this invention are the benzimidazolon pigments, the isoindoline pigments and the fused azo pigments.

(d) Black-type coloring agents

Preferred examples of the black-type coloring agents are, for example, carbon black, lamp black and aniline black. Examples of the carbon black include channel black, roller black, disk black, gas furnace black, oil furnace black, thermal black and acetylene black.

-Other compounding agents-

In the transluent powder paints of this invention, in addition to the above-mentioned coloring agents, curing agents, curing accelerators, transparent electroconductive fine powders, charge controlling agents, leveling agents (smoothing agents) and defoaming agents may be dispersed and compounded, as required, in the binder resins so long as these compounding agents do not impair the translucency and transparency of the binder resins.

The curing agents and the curing accelerators are used to cure the binder resins in the powder paints and harden the coated film when the powder paint applied to the surface of the material to be coated is melted by heating to form the coated film. Examples of the curing agents may include blocked isocyanate, dodecandioic acid, aqeuous dispersible epoxy resins, aqeuous dispersible amino resins, aqueous dispersible aziridine resins and polycarboxylic acids. The amount of the curing agent may be properly established according to the equivalent of a reactive group which the polyester resin possesses. A typical example of the curing accelerator is dioctyltin maleate. Usually, this curing accelerator is used in an amount of 0.1 to 2 parts by weight per 100 parts by weight of the binder resin.

The transparent electroconductive fine powder is used to adjust the electric conductivity of the transparent powder paint. As explained before, when powder paints having different colors are mixed to perform toning, a coated film having a uniformly toned color cannot be obtained, and a mottled pattern may occasionally be formed. Furthermore, a coated film having a color hue and a color tone which can be expected from the mixing ratio of pigments cannot be obtained. Although the cause of this fact has not been elucidated exactly, the present inventors assume that it may be due to the difference of the electric conductivities between the powder paints to be mixed. When powder paints having different electric conductivities are mixed, and the resulting powder paint composition is charged by corona charging or frictional charging and subjected to electrostatic coating, an electric line of force generated between the powder paint composition and the surface of a material to be coated is not uniform. As a result, a mottled pattern is formed in the coated film, or a coated film having the desired color hue cannot be obtained. For example, when a black-type powder paint and a powder paint having another color are mixed to perform toning, the black-type powder paint has a higher electric conductivity than the other powder paint because carbon black as an electric conductor is compounded. Accordingly, when a black-type powder paint is used, it is thought that the above-mentioned inconvenience is generated.

According to this invention, by compounding the transparent electroconductive fine powder to adjust the electric conductivity of the transparent powder paint, the electric conductivities of powder paints having different colors can be approached. As a result, the chargeabilities of these powder paints are made equivalent, and an electric line of force

generated between the powder paint composition and the surface of a material to be coated at the time of electrostatic coating becomes uniform. Accordingly, it is possible to form a coated film having the desired color hue.

Examples of the transparent electric conductive fine powder include tin oxide, indium oxide and indium-tin oxide. Especially, it is preferred to dope antimony on tin oxide. The transparent electroconductive fine powder should desirably be flaky or needle-shaped fragments to impart sufficient electric conductivity in a small compounded amount. Specifically, this powder should preferably have an aspect ratio (long axis/thickness) of at least 30, and a thickness of 0.1 μm or below. If the aspect ratio is less than 30, the contacting probability of fine powders with each other becomes low and it is likely that the electric conductivity imparting effect will become insufficient. If the thickness is larger than 0-1 μm, it is likely that the translucency of the powder paint will be lowered by interference of light because the wavelength of the powder approaches the wave-length (about 0.3 to 0.8 μm; of a visible ray. The length of the transparent electroconductive fine powder in a long axis is preferably 2 μm or below. If it exceeds 2 μm, it becomes difficult to disperse the transparent electroconductive fine powder uniformly in the binder resin.

The compounding amount of the transparent electroconductive fine powder is established according to the intended charging properties of the transparent powder paint, but usually, it should be 0.5 to 5 parts by weight, especially 1 to 3 parts by weight, based on 100 parts by weight of the binder resin.

The charge controlling agent is compounded in order to charge the transparent powder paint sufficiently and make it easy to electrostatically adhere to the material to be coated. In the present invention, the pigments of the general formulae (2), (5), (6) and (10) among the above coloring agents act as the charge controlling agents. But to ensure a sufficient charged amount, conventionally known various charge controlling agents may be compounded. For example, when the powder paint is charged positively, a positive charge controlling agent can be compounded, and when the powder paint is charged negatively, a negative charge controlling agent can be compounded.

As the charge controlling agents, those charge controlling agents which are colorless or pale-colored and have excellent solubility or dispersibility in the above binder resin may be used.

Examples of the positive charge controlling agents are quaternary ammonium salts, especially quaternary ammonium salts expressed by the following general formula (11):

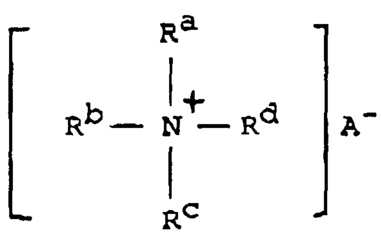

(11)

wherein $R^a$, $R^b$, $R^c$ and $R^d$ are a lower alkyl group having 1 to 6 carbon atoms, a long-chain alkyl or alkenyl group having at least 7 carbon atoms, or a benzyl group, among which at least one group is the long-chain alkyl or alkenyl group and two groups are lower alkyl groups or benzyl groups, and $A^-$shows an anion.

In the general formula (11), examples of the long-chain alkyl group corresponding to $R^a$ to $R^d$ include an octyl group, a decyl group, a dodecyl group, a tetradecyl group, a hexadecyl group, an octadecyl group, an eicosyl group, a docosyl group and stearyl group. Examples of long-chain alkenyl groups include groups containing one or more than two carbon-carbon double bonds in the molecules of these long-chain alkyl groups such as an oleyl group, a linolyl group and a hexadecyl group.

Examples of the anion represented by $A^-$ are anions derived from inorganic acids containing a molybdenum atom or a tungsten atom, such as molyodic acid, phosphomolybdic acid, silicomolybdic acid, chromium.molybric acid, bromo.molyodic acid, tungstic acid, phosphotungstic acid, silicotungstic acid, chromium.tungstic acid, bromo.tungstic acid, phosphotungsten. molybdic acid, and silicotungscen.molybdic acid; a chlorine ion; a bromine ion; an iodine ion; a nitrate ion; a sulfate ion; a perchlorate ion; a tetraphenylboron ion; hexafluorine ion; and naphtholsulfonate ion.

The most preferred examples of the quaternary ammonium salts expressed by the formula (11) include

$$(C_{16}H_{33})_2N^+(CH_3)_2.1/4Mo_8O_{26}^{4-},$$

$$(C_{16}H_{33})_2N^+(CH_3)_2.1/6Mo_7O_{24}^{6-}$$ and

$(C_{16}H_{33})_2N^+(CH_3)_2.1/2WO_4^{2-}$.

They may be used singly or as a mixture of at least two compounds.

Examples of negative charge controlling agents may include aromatic oxycarxylic acids or salts thereof expressed by the following formula (12):

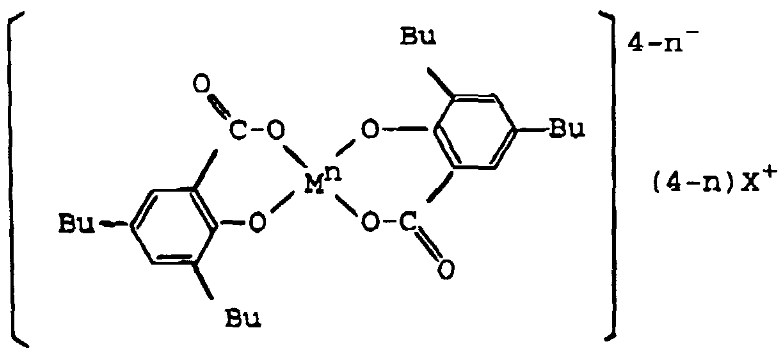

(12)

wherein M represents Zn, Al or B, X represents H or an alkali metal element, and n is the valence of M,

and an aromatic dicarboxylic acid or its salt expressed by the general formula (13):

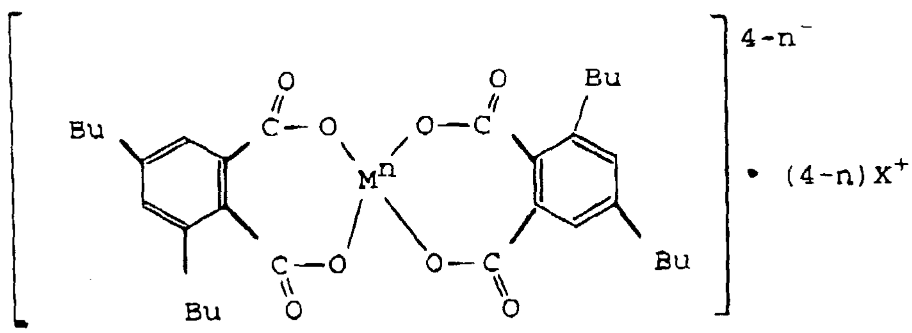

(13)

wherein M represents Zn, Al or B, X represents H or an alkali metal element, and n represents the valence number of M.

The compounding amount of the above-mentioned charge controlling agents is not particularly limited so long as it does not impair the transparency of the powder paint, but the general amount of the charge controlling agent is suitably 0.5 to 10 parts by weight, especially 1 to 8 parts by weight, per 100 parts by weight of the binder resin.

According to this invention, when electrostatic coating is carried out by using a frictional charging gun, it is preferred to use the positive charge controlling agent and the negative charge controlling agent conjointly. When the electrostatic coating is carried out by using a frictional charging gun, unlike the case of using a corona charging gun, there is an advantage that dusts and dirts are difficult to enter the coated film. On the other hand, the charged amount of the powder paint is affected by environmental conditions such as temperature or humidity, and especially at a high humidity, it has a defect that a sufficient charge amount of the powder paint cannot be ensured. Since the charged amount of the individual powder paint particles varies greatly, the distribution of the charged amount is broad, and further the powder paint contains lowly charged particles in which the charged amount is insufficient and particles charged to an inverse polarity, there is a problem in that the coating efficiency onto a material to be coated is low. However, when a combination of the afore-mentioned positive charge controlling agent and the negative charge controlling agent is used, the

interacting function of the two charge controlling agents decreases the dispersion of the charged amount of the individual particles and the distribution of the charged amount becomes sharp whereby the above problems are settled. This phenomenon has been ascertained by many experiments. The reason for this phenomenon has not exactly elucidated, but the present inventors assume as follows. If a positive charged-type transparent powder paint is taken up as an example, when a negative charge controlling agent is compounded in addition to a positive charge controlling agent, the positive charge controlling agent is uniformly dispersed in the binder resin. As a result, the charging ability of the positive charge controlling agent becomes uniform to every powder particle.

In this embodiment, the total amount of the positive charge controlling agent and the negative charge controlling agent should desirably within the above-mentioned range. In the case of a positively charged powder paint, the ratio of the positive charge controlling agent and the negative charge controlling agent is 1 : 1 to 10 : 1, preferably 10 : 8 to 10 : 1, most preferably 10 : 5 to 10 : 1. In the case of a negatively charged powder paint, the ratio between the positive charge controlling agent and the negative charge controlling agent should be reversed in respect of the above-mentioned ratio.

The smoothing agent is compounded to increase the flowability when the transparent powder paint is melted by heating and to smoothen the coated film. As an example of the smoothing agent, polybutyl acrylate, for example, will be mentioned. Generally, "Acronal 4F", a trademark of BASF, "YF-3919", a trade-mark of Toshiba-Silicone Co., Ltd., and "Modaflow 2000", a trademark of Monsanto Co., which are commcerically available, are used. The compounding amount of the smoothening agent used is 0.1 to 2 parts by weight, preferably 0.5 to 1 part by weight, per 100 parts by weight of the binder resin.

The defoamer is compounded to prevent the occurrence of cells at the time of forming a coated film by melting the transparent powder paint by heating. For example, benzoin is used. The compounding amount of the defoamer is suitably about 0.1 to 2 parts by weight per 100 parts by weight of the binder resin.

-Production of the transparent powder paint-

The transparent powder paint of this invention can be produced by pre-kneading the above components uniformly by a dry blender, a Henschel mixer or a ball mill, then uniformly melt-kneading the pre-kneaded mixture by using a kneading machine such as a jet mill, a bunbury mixer, a roller or a monoaxial or biaxial extruder, cooling the resulting kneaded mixture and pulverizing it, and as required, classifying the resulting mixture. It can also be prepared by a conventionally known method such as a polymerization method, a microcapsular polymerization method or a spray dry method, in addition to the above-mentioned method.

The transparent powder paint so obtained has an average particle diameter of generally 10 to 200 μm, preferably 20 to 100 μm, most preferably 30 to 70 μm.

In the resulting transparent powder paint of this invention, the coloring agent is uniformly dispersed in the binder resin composed of the polyester resin. As a result, it assumes a very vivid color. The degree of dispersion of this coloring agent can be evaluated by interposing this powder paint between two glass plates, compressing the paint, heating the powder paint to 110°C for 1 minute to melt it, and forming a coated film having a thickness of about 1.0 μm, and counting the number of fine aggregates of the coloring agent (having an area of at least 10 $\mu m^2$ and 12.5 $\mu m^2$ or less) and the number of large aggregates of the coloring agent (having an area of at least 12.5 $\mu m^2$ and 15 $\mu m^2$ or less) in a microphotograph of a region having an area of 1,000,000 $\mu m^2$ about the center of the coated film. For example, in the transparent powder paint using the cyan-type coloring agent, the number of the fine aggregates is 120 or less, and the number of the large aggregates is 70 or less. In the transparent powder paint using the magenta-type coloring agent, the number of the fine aggregates is 60 or less, and the number of the large aggregates is 30 or less. Furthermore, in the transparent powder paint using the yellow-type coloring agent, the number of the fine aggregates is 35 or less, and the number of the large aggregates 15 or less.

In order to increase the flowability or the charging property of the above-mentioned transparent powder paint of this invention, it is possible to compound an external additive having a particle diameter of about 1.0 μm in the above powder paint. Examples of such external additive include fine powders of metal oxides such as aluminum oxide, silicon dioxide, titanium oxide and zinc oxide, and fine particles of a fluorine-containing resin. Especially, silica-type surface treating agents containing hydrophobic or hydrophilic silica fine particles, specifically ultrafine particulate anhydrous silica and colloidal silica, may be used. The total compounding amount of the external additive is about 0.1 to 3.0 parts by weight per 100 parts by weight of the transparent powder paint.

(Formation of the coated film)

In the present invention, a coated film having a predetermined color is formed on the surface of a material to be coated using the above-mentioned transparent powder paint. The coated film of the transparent powder paint may be obtained as a single layer, or it is possible to coat a multiplicity of transparent powder paints in overlapping layers and

tone the resulting layers. By coating transparent powder paints having cyan, magenta and yellow describe above or further a transparent powder paint having a black color in overlapping layers, it is possible to form coated films toned in various colors. In coating various layers of different colors in overlapping layers, the thickness of one coated film by each powder paint may be prescribed to be about 20 to 100 μm, especially about 30 to 70 μm. When the thickness of the coated film is smaller than the above range, the hue of the coated film is liable to become non-uniform. On the contray, when the thickness of the coated film exceeds the above range, color reproduction becomes inferior.

As a method of forming the coated film, ordinary powder coating methods may be applied. For example, by using a fluidized dipping method; electrostatic methods using a corona gun or a frictional electrification gun (tribo-gun); or an electrostatic fluidized dipping method, the transparent powder paint is adhered to the surface of a material to be coated, and thereafter, the powder paint is melted by heating to form the intended coated film. When the coated film is formed especially by using the tribo-gun, it is preferred to use a transparent powder paint containing a positive charge controlling agent and a negative charge controlling agent as mentioned above.

In forming the coated film in this manner, the above-mentioned transparent powder paints may be used by dry mixing. A coated film toned to various colors can be formed by dry mixing transparent powder paints having the above-mentioned cyan, magenta and yellow, or further mixing a transparent powder paint having a black color, and forming the coated film using the above mixture. Since cyan, magenta and yellow are three primary colors, if a mixture of transparent powder paints which further contains a powder paint having a black color is used, by properly adjusting the compounding amounts of these powder paints, a coated film toned to various colors may be obtained. The dry mixing of the transparent powder paints can be carried out by using a dry blender, a Henschel mixer or a ball mill. The sufficient mixing time will be about 1 to 10 minutes.

When the transparent powder paints are use as a dry-mixed product, a uniformly toned coated film can be formed by adjusting the electric conductivities of transparent powder paints to be mixed to the same degree in accoradance with the compounding amounts of these transparent electroconductive fine powders. Specifically, when the electric conductivity of one transparent powder paint is 1, the electric conductivity of another transparent powder paint is adjusted to 0.5 to 2, preferably 0.55 to 1.8, most preferably 0.8 to 1.25. If the transparent powder paints used have an electric conductivity outside this range, the resulting coated film obtained by electrostatic coating tends to give a mottled pattern.

Furthermore, a toned coated film can be formed by using a mixture of a transparent powder paint and a non-transparent powder paint havng a larger particle diameter in forming the coated film. Fig. 1 shows a process for forming a coated film by this method.

As shown in Fig. 1 (a), a mixture of a non-transparent powder paint 6 having a large particle diameter and a transparent powder paint 7 having a small particle diameter is coated on a material 8 to be coated. In the resulting coated layer, the transparent powder paint having many small-diameter aggregates is adhered on the surface of the non-transparent powder paint 6. Accordingly, as shown in Fig. 1 (b), when the coated layer is heated and melted, the transparent coated film 10 is formed on the upper part of the non-transparent coated film 9, and the color of the coated film observed from outside is a uniformly mixed color resulting from mixing the color of the non-transparent powder paint with the transparent powder paint 7.

In the above-mentioned method, the particle diameter of the transparent powder paint is prescribed so that it will be 1/2 or below of the particle diameter of the non-transparent powder paint. If the particle diameter of the non-transparent powder paint is smaller than this range, it becomes difficult to adhere much transparent powder paint to the surface of the non-transparent powder paint. Thus, the particle diameter of the non-transparent powder paint used in this method should be at least 20 μm, preferably 40 to 200 μm, most preferably 40 to 100 μm.

In the present invention, a non-transparent coated film is formed on the surface of a material to be coated, and a transparent coated film may be formed on the above coated film using a trasparent powder paint. Fig. 2 shows a process for forming a coated film by this method.

As shown in Fig. 2 (a), a non-transparent powder paint 2 is coated on a material 1 to be coated, and then as shown by Fig. 2 (b), a transparent powder paint 3 having a different color from the powder paint 2 is coated on the above-applied coated film. Thereafter, the non-transparent power paint 2 and the transparent powder paint 3 are heated and melted to form a transparent coated film 5 on a non-transparent coated film 4 as shown in Fig. 2 (c). When a coated film is formed in this way, the color of the coated film observed from outside becomes a uniform mixture of the color of the non-transparent powder paint and the color of the transparent powder paint 7 in the same way as the above-mentioned method. Especially, since in this method, the film thickness of the transparent coated film 5 to be formed on the non-transparent coated film 4 can be controlled by over coating, the degree of toning can be adjusted subtly.

In the method shown in Fig. 2, the thickness of the non-transparent coated film 4 may usually be 30 to 200 μm, especially 50 to 150 μm, and the thickness of the transparent coated film 5 may usually be 20 to 100 μm, preferably 30 to 70 μm. Without heating and melting the non-transparent powder paint 2 and the transparent powder paint 3 simultaneously, the non-transparent powder paint 2 is first heated and melted to form a non-transparent coated film 4, and thereafter, the transparent powder paint 3 is coated, heated and melted to form a transparent coated film 5. Furthermore, if in this method, a coated film 4 is formed by using a non-transparent white powder paint, the wavelength of an incident light can be made equal to the wavelength of a reflected light.

In the method of forming a coated film by using the non-transparent powder paint and the transparent powder paint conjointly as shown in Figs. 1 and 2, the non-transparent powder paint may include any known paints. For example, binder resins formed by including various coloring agents may be used.

As binder resins used for forming this non-transparent powder paint, those described as used conjointly with the polyester resins may be exemplified.

Examples of the coloring agents include inorganic pigments and organic pigments. Examples of the organic pigments include azo pigments such as Hansa Yellow G, Hansa Yellow 10G, Hansa Yellow 13G, Benzidire Yellow, Vulcan Orange, Purazolone Red and Pyrazolone Red B; acid pigments and basic pigments such as Acid Orange R, Quinoline Yellow, Orange II, Acid Blue, Malachite Green, Methyl Violet and Victoria Blue; phthalocyanine pigments, quinacridone pigments and dioxane pigments such as Phthalocyanine Blue, Sulfonated Copper Phthalocyanine. Quinacridone Red, Quinacridone Violet and Carbazole Dioxane Violet; organic fluorescent pigments; and pigments derived from vat dyes. White inorganic pigments such as $TiO_2$ may be used. These coloring agents may be compounded in an amount of usually 1 to 20 parts by weight, preferably 1 to 10 parts by weight, most preferably 1 to 5 parts by weight, per 100 parts by weight of the binder resin.

It is possible to compound various compounding agents such as curing agents, curing accelerators, transparent electroconductive fine powders, charge controlling agents, smoothing agents, and external additives to increase the flowability and antistatic property in the non-transparent powder paint in the same way as in the transparent powder paints.

To form a non-transparent coated film 4 by the method shown in Fig. 2, solvent-type paints using an organic solvent may be used.

(Examples)

Referential Example 1

(Preparation of the polyester resin)

A 2-liter flask was charged with 840 g of polyoxypropylene(2.2)-2,2-bis-(4-hydroxyphenyl)propane (the diol component of general formula (1) in which $R^1$ and $R^2$ represent trimethylene, and x and y are respectively 2), 195 g of polyoxyethylene (2.0)-2,2-bis(4-hydroxyphenyl)propane (the diol components of general formula (1) in which $R^1$ and $R^2$ respectively represent ethylene, x is 2, and y is 0), 29 g of terephthalic acid (dicarborylic acid), 2 g of di-n-butyltin oxide (stabilizer), and 1.5 g of hydroquione (diol component), and these components were copolycondensed with stirring at 200°C. The reaction was terminated when the softening point of the copolymer reached 122°C in accordance with ASTM E 28-51T.

The resulting polyester resin was a pale yellow solid having a glass transition temperature of 66°C in accordance with DSC (scanning calorimeter). It had an acid value (AV) of 14 KOH mg/g and a hydroxyl value (OHV) of 36 KOH mg/g (OHV/AV=2.57).

Example 1

(Production of a cyan-type transparent powder paint)

The following components were mixed by a Henschel mixer, melted and kneaded by an extruding kneader, and thereafter pulverized by a jet mill.

Binder resin: 100 parts by weight of the polyester resin obtained in Referential Example 1
Coloring agent: 5 parts by weight of the copper phthalocyanine-type pigment expressed by the general formula (2-1)
Curing agent: 8 parts by weight of blocked isocyanate
Charge controlling agent: 1 part by weight of a quaternary ammonium salt
Leveling agent: 1 part by weight of Acronal 4F

Thereafter, the pulverized product was classified to 150 mesh to give a cyan-type transparent powder paint having an average particle diameter of 10 μm.

Comparative Examples 1 to 3

(Production of cyan-type transparent powder pigments)

In the same way as in Example 1, cyan-type transparent powder paints having an average particle diameter of 10 μm were prepared except that as the coloring agent, 5 parts by weight of C.I. Pigment Blue 15 (the copper phthalocyanine-type pigment of general formula (2) in which $R^3$, $R^4$, $R^5$ and $R^6$ represent a hydrogen atom), C.I. Solvent Blue 14 (anthraquinone dye) or C.I. Solvent Blue 7 was used.

Example 2

(Production of a magenta-type transparent powder paint)

In the same way as in Example 1, a mageta-type transparent powder paint having an average particle diameter of 10 μm was prepared except that as the coloring agent, 5 parts by weight of C.I. Pigment Violet 122 was used.

Comparative Examples 4 to 6

(Production of magenta-type transparent powder paints)

In the same manner as in Example 2, magenta-type transparent powder paints having an average particle diameter of 10 μm were prepared except that as the coloring agent, 5 parts by weight of C.I. Pigment Violet 19 (the quinacridone-type pigment of general formula (5) in which $Q^1$ and $Q^2$ represent a hydrogen atom), C.I. Pigment Red (57 : 1) or C. I. Pigment Red (48 : 1) was used.

Example 3

(Production of a yellow-type transparent powder paint)

In the same way as in Example 1, a yellow-type transparent powder paint having an average particle diameter of 10 μm was prepared except that 5 parts by weight of C.I. Pigment Yellow 17 expressed by the formula (6-1) was used as the coloring agent.

Comparative Examples 7 to 9

(Production of yellow-type transparent powder paints)

In the same way as in Example 3, yellow-type transparent powder paints having an average particle diameter of 10 μm were prepared except that as the coloring agent, 5 parts by weight of C. I. Pigment Yellow 13 expressed by the formula (Y-1), C. I. Pigment Yellow 55 expressed by the formula (Y-2) or C.I. Pigment Yellow 83 expressed by the formula (Y-3) was used.

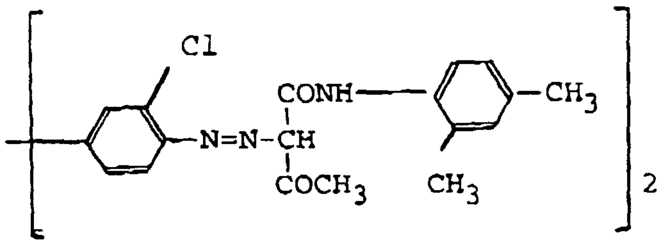

(Y-1)

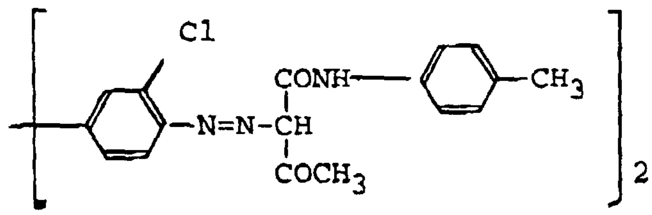

(Y-2)

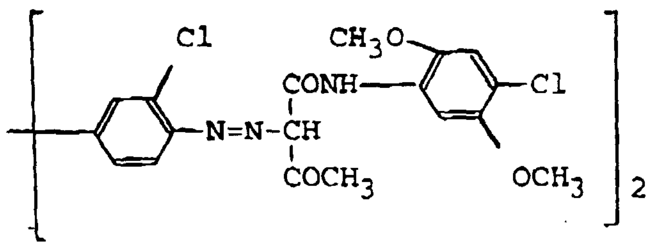

(Y-3)

Examples 4 to 6

(Production of yellow-type transparent powder paints)

In the same way as in Example 3, yellow-type transparent powder paints having an average particle diameter of 10 μm were prepared except that as the coloring agent, 5 parts by weight of C. I. Pigment Yellow 93 expressed by the formula (9), C. I. Pigment Yellow 109 expressed by the formula (8), or C. I. Pigment Yellow 154 expressed by the formula (7) was used.

(Evaluation of the transparent powder paints)

The transparent powder paints obtained in Examples 1 to 6 and Comparative Examples 1 to 9 were subjected to the following evaluating tests.

(a) Evaluation of dispersiblity

Each of the transparent powder paints obtained in Examples 1 to 6 and Comparative Examples 1 to 9 was interposed between two glass plates, and melted by heating at 110°C for 1 minute to give samples each having a thickness of 1 μm. Thereafter, the number of pigment particles having a size (area) of 12.5 to 15 $\mu m^2$ was measured based on the paint particles per 1,000,000 $\mu m^2$ of the sample by image analysis. By the result obtained, the dispersibility of the pigment is evaluated. The basis of the evaluation of dispersibility is shown in Table 1. If the evaluation is ○, the dispersiblity is good.

Table 1

| | ○ | X |
|---|---|---|
| Cyan-type | less than 70 | at least 70 |
| Magenta-type | less than 30 | at least 30 |
| Yellow-type | less than 15 | at least 15 |

(b) Evaluation of translucency

The light percent transmission of the sample obtained as above was measured by a spectrophotometer, and the transparency was evaluated by the standard shown below. The evaluation of ○ indicates that the transparency of the sample was sufficient Cyan-type transparent powder paint: When the light percent transmission at 650 nm is 2.0%, if the light percent transmission which makes a peak among 400 to 600 nm is at least 40%, the result is ○. If the light percent transmission is less than 40%, the result is X. Magenta-type transparent powder paint: When the light percent transmission at 550 nm is 2.0%, if the light percent transmission at 700 nm is at least 50%, the result is ○. If the light percent transmission is less than 50%, the result is X.

Yellow-type transparent powder paint: When the light percent transmission at 450 nm is 2.0%, if the light percent transmission at 600 nm is at least 50%, the result is ○. If the light percent transmission is less than 50%, the result is X.

The result of the evaluation are shown in Tables 2 to 4.

Table 2

| | Coloring agent | Dispersibility | Transparency |
|---|---|---|---|
| Example 1 | Copper phthalocyanine pigment (2-1) | ○ | ○ |
| Com.Ex. 1 | C.I. Pigment Blue 15 | X | X |
| Com.Ex. 2 | C.I. Solvent Blue 14 | X | X |
| Com.Ex. 3 | C.I. Solvent Blue 70 | X | X |

Table 3

| | Coloring agent | Dispersibility | Transparency |
|---|---|---|---|
| Example 2 | C.I.Pigment Violet 122 | ○ | ○ |
| Com.Ex. 4 | C.I.Pigment Violet 19 | X | X |
| Com.Ex. 5 | C.I.Pigment Violet 57:1 | X | X |
| Com. Ex.6 | C.I.Pigment Violet 48:1 | X | X |

Table 4

| | Coloring agent | Disperbility | Transparency |
|---|---|---|---|
| Example 3 | C.I. Pigment Yellow 17(6-1) | ○ | ○ |
| Com.Ex. 7 | C.I. Pigment Yellow 13(Y-1) | X | X |
| Com.Ex. 8 | C.I. Pigment Yellow 55(Y-2) | X | X |

Table 4 (continued)

| | Coloring agent | Disperbility | Transparency |
|---|---|---|---|
| Com.Ex. 9 | C.I. Pigment Yellow 83(Y-3) | X | X |
| Example 4 | C.I. Pigment Yellow 93 | ○ | ○ |
| Example 5 | C.I. Pigment Yellow 109 | ○ | ○ |
| Example 6 | C.I. Pigment Yellow 154 | ○ | ○ |

As is clear from Tables 2 to 4, the powder paints obtained by combining the above polyester resins and the pigments of general formulas (2) and (5) to (9) have sufficient translucency, and the pigments have excellent dispersibility in the polyester resins.

In contrast, in the powder paints of Comparative Examples 1 to 9, the coloring agents have low dispersibility in the polyester resin, and the powder paint have insafficient transparency.

(Production of a transparent cyan-type powder paint)

<u>Example 7</u>

The following components were pre-mixed by using a Henschel mixer, and then melted and kneaded by using an extruding kneading machine, and the resulting kneaded

| (Components) | (Parts by weight) |
|---|---|
| Binder resin: | |
| Polyester resin obtained in Referential Example 1 | 85 |
| Positive charge controlling agent: | |
| A quaternary ammonium salt expressed by the following formula | 2 |
| $(C_{16}H_{33})_2N^+(CH_3)_2 \cdot 1/4\ Mo_8O_{26}{}^{4-}$ | |
| Negative charge controlling agent: | |
| An aromatic dicarobylic acid of the of the general formula (13) wherein M is Al, X is H and n is 3 | 1 |
| Coloring agent: | |
| C.I. Pigment Blue 16 | 4 |
| Curing agent: | |
| Isocyanate | 15 |
| Smoothing agent: | |
| Acronal 4F | 1 |

product was cooled and pulverized.

The above pulverized product was classified by using a 150 mesh sieve to produce a posive charging cyan-type transparent powder paint having an average particle diameter of 12 μm.

<u>Comparative Example 10</u>

In the same way as in Example 7, a positive-charging cyan-type transparent powder paint having an average par-

ticle diameter of 12 μm was produced except that the aromatic dicarboxylic acid as a negative charge controlling agent was not compounded.

(Production of a transparent magenta-type powder paint)

Example 8

The following components were pre-mixed by using a Henschel mixer, and melted and kneaded by using an extruding kneadering machine, and the resulting kneaded product was cooled and pulverized.

| (Components) | (Parts by Weight) |
|---|---|
| Binder resin: | |
| Polyester resin obtained in Referential Example 1 | 85 |
| Positive charge controlling agent: | |
| A quaternary ammonium salt expressed by the following formula | 2 |
| $(C_{16}H_{33})_2N^+(CH_3)_2 \cdot 1/4\ Mo_8O_{26}^{4-}$ | |
| Negative charge controlling agent: | |
| An aromatic oxycarboxylic acid of general formula (12) in which M is Al, X is H, and n is 3 | 1 |
| Coloring agent: | |
| C. I. Pigment Red 122 | 4 |
| Curing agent: | |
| Isocyanate | 15 |
| Smoothing agent: | |
| Acronal 4F | 1 |

The above pulverised product was classified by a 150 mesh sieve to produce a positive-charging magenta-type transparent powder paint having an average particle diameter of 12 μm.

Comparative Example 11

In the same way as in Example 8, a positive-charging magenta-type transparent powder paint having an average particle diameter of 12 μm was produced except that the aromatic oxycarboxylic acid as a negative charge controlling agent was not compounded. (Production of a transparent yellow-type powder paint)

Example 9

The following components were pre-mixed by using a Henschel mixer and melted and kneaded by using an extruder kneading machine, and the resulting kneaded product was cooled and pulverized.

| (Components) | (Parts by weight) |
|---|---|
| Binder resin: | |
| Polyester resin obtained in Referential Example 1 | 85 |
| Positive charge controlling agent: | |
| A quaternary ammonium salt of the following formula | 2 |
| $(C_{16}H_{33})_2N^+(CH_3)_2 \cdot 1/4Mo_8O_{28}{}^{4-}$ | |
| Negative charge controlling agent: | |
| An aromatic oxycarboxylic acid of the general formula (12) wherein M is Al, X is H and n is 3 | 1 |
| Coloring agent: | |
| C.I. Pigment Yellow 13 | 4 |
| Curing agent: | |
| Isocyanate | 15 |
| Smoothing agent: | |
| Acronal 4F | 1 |

Thereafter, the pulverized product was classified by using a 150 mesh sieve to produce a positive-charging yellow-type transparent powder paint having an average particle diameter of 12 μm.

Comparative Example 12

In the same manner as in Example 9, a positive-charging yellow-type transparent powder paint having an average particle diameter of 12 μm except that the aromatic oxycarboxylic acid as a negative charge controlling agent was not compounded.

(Measurement of the charged amount)

Five parts by weight of each powder paint obtained in the above Examples and Comparative Examples and 100 parts by weight of ferrite particles coated with the same fluorine resin as the inner wall surface of a frictional charging gun were placed in a closed container, and the closed container was revolved 10 times by a ball mill to charge the powder paint. Then, by a blow-off method, the charged amount (μC/g) of the powder paint was measured.

(Measurement of the distribution of the amount of charging)

By using a charge amount measuring apparatus shown in Fig. 3, the distribution of the charged amount of the powder paint in Examples and Comparative Examples was measured by the following sequence.

A mixture of the powder paint and the ferrite particles charged in the same way as mentioned above was held on a magnet 4 of the apparatus. Thereafter, compressed air of an air needle 5 was blown to the mixture. Only the powder paint was scattered and separated into a separating portion 2.

Next, the scattered powder paint was collected into a funnel 6 and introduced into a measuring section 3. It was taken on an air current by a suction apparatus 11 with the measuring section 3 and dropped perpendicularly on a filter 10.

At this time, the powder paint, in passing between electrode rods 9a and 9b, is dropped in an electric field in a horizontal direction between the electrode rods 9a and 9b while receiving a Coulmb's force H in a horizontal direction

according to the amount of charge and a gravity in a perpendicular direction, and the powder paint was dispersed and distributed according to its mass and the charged amount.

Then, when the distributed condition of the powder paint is subjected to image treatment on the filter 10, the distribution of the charged amount is found.

(Measurement of the efficiency of coating)

The powder paint of each of Examples and Comparative Examples is actually coated on the surface of an iron plate by an electrostatic coating method using a frictional charging gun in which on an inside wall surface a fluorine resin as a charging member is arranged.

From the ejected amount Pa (g) of the powder paint ejected from the frictional charging gun and the amount Pb (g) of the powder paint coated on the iron plate, the coating efficiency (%) was found from the following formula:

$$\text{Coating efficiency (\%)} = (Pb/Pa) \times 100.$$

(Evaluation of the characteristics of the recovered powder paint)

In the above measurement of the coating efficiency, the powder paint recovered without being coated on the iron plate was collected, and again coated on the surface of the iron plate by the same electrostatic coating method. The characteristics of the recovered powder paint were evaluated by observing the condition of the coating by the naked eyes by the following standards.

○:No particular abnormality in the coated condition; good characteristics of the powder.
X: Poor coating, and poor characteristics of the powder.

This evaluation is to examine the presence and absence of the lowly charged powder or inversely charged powder mentioned above. If the result is ○, the recovered powder paint hardly contains the lowly charged powder or inversely charged powder, but if the result is X, it contains such a powder in a large amount.

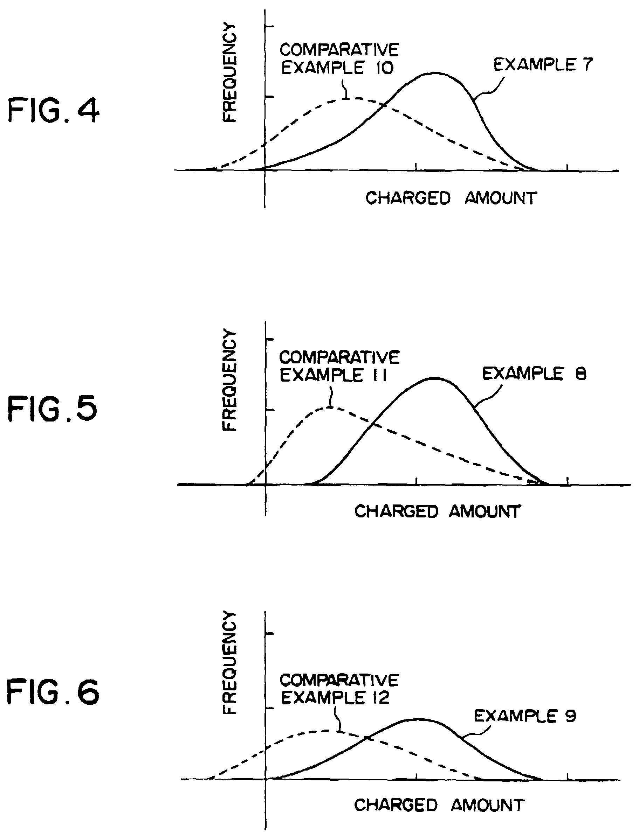

The results are shown in Table 5. Furthermore, the measured results of the distribution of the charged amount in each Example and in each Comparative Example are shown in Figs 4 to 6.

Table 5

| | | Ex.7 | CEx.10 | Ex.8 | CEx.11 | Ex.9 | CEx.12 |
|---|---|---|---|---|---|---|---|
| Color | | Cyan | | Magenta | | Yellow | |
| Charge controlling agent (by weight) | Positive | 2 | 2 | 2 | 2 | 2 | 2 |
| | Negative | 1 | - | 1 | - | 1 | - |
| Charged amount (μC/g) | | 18 | 12 | 21 | 11 | 19 | 9 |
| Distribution of charged amount | | Fig. 4 | | Fig. 5 | | Fig. 6 | |
| | | Solid line | Broken line | Solid line | Broken line | Solid line | Broken line |
| C.E. (%) | | 78 | 54 | 75 | 61 | 75 | 46 |
| Characteristics | | ○ | X | ○ | X | ○ | X |
| note: C.E. denotes coating efficency. | | | | | | | |

As can be seen from the above Tables and Figs., the powder paints obtained in Examples 7 to 9 in which a combination of the positive charge controlling agent and the negative charge controlling agent was used had a sharper distribution of the charged amount as compared with the powder paints in which only the positive charge controlling agents were used, and did not form the lowly charged powder or the inverse charged powder, and good coated films could be formed.

Referential Example 2 (Production of a transparent powder paint)

Together with the coloring agents and the transparent electric conductive fine powder shown in Table 6, the following components were mixed by a Henschel mixer, and melted and kneaded by an extruder kneading machine. Thereafter, the resulting kneaded mixture was pulverized by a jet mill. Then, the pulverized product was classified by a 150 mesh sieve to give transparent powder paints having an average particle diameter of 12 μm (samples Nos. 1 to 5).

| | |
|---|---|
| Binder resin: the polyester resin obtained in Referential Example 1 | 85 parts by weight |
| Curing agent: blocked isocyanate | 15 parts by weight |
| Smoothing agent: Acronal 4F | 1 part by weight |

(Measurement of the electric conductivity)

Each of the above transparent powder paint was filled in a shield case, and pressed under a pressure of 20 Kg/cm$^2$ to give a sample having a thickness of 0.4 mm. This sample was set in an electrode adaptor [an electrode for a powder, SE-43, manufactured by Ando Electric Co., Ltd.], and the electrode adapter was connected to an impedance analyzer (4192A LF manufactured by Yokokawa Huelet Packard Co., Ltd.) to measure the electric conductivity.

With respect to the transparent powder paints (samples Nos. 1 to 5), the colors of the powder paints, the coloring agents and the transparent electric conductive fine powder used, and the measured values of the electric conductivities of the powder paints are shown in Table 6.

Table 6

| Sample No. | 1 | 2 | 3 | 4 | 5 |
|---|---|---|---|---|---|
| Color of the transparent powder paint | Cyan | Cyan | Magenta | Magenta | Magenta |
| Coloring agent | C.I. Pigment Blue 16 | C.I. Pigment Blue 16 | C.I. Pigment Red 122 | C.I. Pigment Red 122 | C.I.Pigment Red 122 |
| compounding amount (parts by weight) | 4 | 4 | 4 | 4 | 4 |
| Transparent electric conductive fine powder | Antimony-doped tin dioxide | none | Antimony-doped tin dioxide | Antimony-doped tin dioxide | none |
| Aspect ratio | 35 | - | 35 | 20 | - |
| Thickness (μm) | 0.05 | - | 0.05 | 0.06 | - |
| Compounding amount (parts by weight) | 3 | - | 2 | 2 | - |
| Electric conductivity (x$10^{-10}$ S/cm) | 6.7 | 1.1 | 6.3 | 1.9 | 1.1 |

Referential Example 3 (Production of a black-type power paint)

Together with carbon blacks shown in Table 7, 85 parts by weight of the binder resin, 15 parts by weight of a curing agent, and 1 part by weight of a smoothing agent were mixed and used. In the same way as in Referential Example 2, black-type powder paints (samples Nos. 6 to 9) having an average particle diameter of 12 μm were prepared.

(Measurement of electric conductivity)

With respect to the black-type powder paints of samples Nos. 6 to 9, the carbon blacks used and the electric conductivities thereof were shown in Table 7.

Table 7

| Sample No. | 6 | 7 | 8 | 9 |
|---|---|---|---|---|
| Carbon black | | | | |
| Volatile content (%) | 6 | 3.5 | 5 | 6 |
| Fracture index | 135 | 110 | 90 | 140 |
| Average particle diameter (μm) | 25 | 22 | 23 | 17 |
| Compounding amount (parts by weight) | 2 | 2 | 2 | 2 |
| Electric conductivity (x $10^{-10}$ S/cm) | 1.2 | 6.3 | 6.7 | 8.1 |

<u>Examples 10 to 12 and Comparative Examples 13 and 14</u>

Any one of the cyan-type transparent powder paints (samples Nos. 1 and 2) and any one of the magenta-type transparent powder paints (samples Nos. 3 to 5) were added to a Henschel mixer in the proportions (weight ratios) shown in Table 8 and stirred for 5 minutes. By dry mixing, toned powder paints were obtained. By using the resulting powder paints, a coated film having a thickness of about 70 μm was formed on the surface of an iron plate by using a corona charing gun. The resulting coated film was observed by the naked eyes, and color unevenness and transparency of the coated film were evaluated. The resuls are shown in Table 8.

Table 8

| | Powder paint (electric conductivity x$10^{-10}$ S/cm) | | Ratio of the electric conductivity (B/A) | Mixing ratio A:B (weight ratio) | Color unevenness | Transparency |
|---|---|---|---|---|---|---|
| | A | B | | | | |
| Example 10 | Sample No.1 (6.7) | Sample No.3 (6.3) | 0.94 | 1:1 | ○ | ○ |
| Example 11 | Sample No.2 (1.1) | Sample No.4 (1.9) | 1.73 | 1:1 | ○ | ○ |
| Example 12 | Sample No.2 (1.1) | Sample No.5 (1.1) | 1.0 | 1:1 | ○ | ○ |
| Com.Ex. 13 | Sample No.1 (6.7) | Sample No.4 (1.9) | 0.28 | 1:1 | X*1 | ○ |
| Com.Ex. 14 | Sample No.1 (6.7) | Sample No.5 (1.1) | 0.16 | 1:1 | X*2 | ○ |

*1: a mottled patteran formed.
*2: a mottled pattern formed markedly.

<u>Examples 13 to 15 and Comparative Examples 15 to 17</u>

Any one of the black-type powder paints (samples Nos. 6 to 9) and any one of the transparent powder paints (samples Nos. 1, 2 and 5) were added to a Henschel mixer in proportions (weight ratios) shown in Table 9 and stirred for 5 minutes. By such dry mixing, powder paints toned were obtained.

Using the resulting powder paints, coated films having a thickness of about 70 μm were formed on the surface of an iron plate by a corona charging gun. Then, the resulting coated films were observed with the naked eyes, and color

unevenness of the coated films were evaluated. The results are shown in Table 9.

Table 9

| | Powder paint (electric conductivity x10$^{-10}$ S/cm) | | Ratio of the electric conductivity (B/A) | Mixing ratio A:B (weight ratio) | Color unevenness |
|---|---|---|---|---|---|
| | A | B | | | |
| Example 13 | Sample No.6 (1.2) | Sample No.2 (1.1) | 0.92 | 1:1 | ○ |
| Example 14 | Sample No.6 (1.2) | Sample No.5 (1.1) | 0.92 | 1:1 | ○ |
| Example 15 | Sample No.7 (6.3) | Sample No.1 (6.7) | 1.06 | 1:1 | ○ |
| Com.Ex. 15 | Sample No.7 (6.3) | Sample No.2 (1.1) | 0.17 | 1:1 | X*2 |
| Com.Ex. 16 | Sample No.8 (6.7) | Sample No.2 (1.1) | 0.16 | 1:1 | X*1 |
| Com.Ex. 17 | Sample No.9 (8.1) | Sample No.2 (1.1) | 0.14 | 1:1 | X*2 |

*1: a mottled patteran formed.
*2: a mottled pattern formed markedly.

As is clear from Tables 8 and 9, Examples 10 to 15 in which the powder paints obtained by mixing the powder paints having substantially the same electric conductivities did not develop color unevenness, and uniformly toned coated films were formed.

Referential Example 3

(1) Production of a non-transparent powder paint

| | |
|---|---|
| Resin: The polyester resin prepared in Referential Example 1 | 85 parts by weight |
| Curing agent: "Pestagon B1530" [manufactured by Huls Co., Ltd.] | 15 parts by weight |
| Smoothing agent: "Acronal 4F" (manufactured by BASF ) | 1 part by weight |
| Pigment: Tittanium dioxide | 10 parts by weight |
| Pigment: C.I. Solvent Blue | 1 part by weight |

The resin, the curing agent, the smoothing agent, and the pigments described above were mixed by a Henschel mixer for 1 minute, and kneaded by using an extruding kneading machine at 110°C. The kneaded product was pulverized by a jet mill, classified by a 150 mesh sieve, and finally a silica fine powder was externally added to form a nonotransparent powder paint having an average particle diameter of 40 μm.

(2) Production of a transparent powder paint

| | |
|---|---|
| Resin: the polyester resin prepared in Referential Example 1 | 85 parts by weight |
| Curing agent: blocked isocyanate | 15 parts by weight |
| Smoothing agent: "Acronal 4F" [manufactured by BASF] | 1 part by weight |
| Pigment: C.I. Pigment Yellow 13 | 1 part by weight |

The resin, the curing agent, the smoothing agent and the pigment described above were mixed by a Henschel mixer for 1 minute and kneaded by using an extruding kneading machine at 110°C. The kneaded product was pulverized by a jet mill, classified by a 150 mesh sieve, and finally silica fine powder was added externally to form a transparent powder paint having an average particle diameter of 20 μm.

Example 16

The non-transparent blue powder paint obtained in Referential Example 3 (1) was coated by electrostatic coating on a steel sheet so that the film thickness became 50 μm by using a corona gun. Then, the yellow transparent powder paint prepared by Referential Example 3 (2) was coated by a corona gun on the non-transparent powder paint so that the thickness of the film became 40 μm, and thereafter, the coated films were baked at 180 °C for 20 minutes. The two kinds of powder paints having a different color were gradually melted from immediately after the placing of the powder paints in the furnace, and finally a coated film having a deep green color with transparency and a film thickness of 90 μm was formed.

Example 17

The non-transparent blue paint obtained in Referential Example 3 (1) was coated on a steel sheet by using a spray gun so that the dry thickness of the film became 20 μm. The coated film was dried. Thereafter, the yellow transparent powder paint prepared in Referential Example 3 (2) was coated uniformly on the coated film formed from the non-transparent paint by an electrostatic spray and baked at 180 °C for 20 minutes. Immediately thereafter, the yellow transparent powder paint was gradually melted, and finally, a coated film having a transparent deep green color was formed.

Example 18

On the coated film having a deep green color formed in Example 16 or 17, a yellow transparent powder paint prepared in Referential Example 3 (2) was coated in the same way as in Example 16 so that the film thickness of the resulting coated film became 40 μm. The resulting film was melted at 180°C for 20 minutes to obtain a coated film having a transparent pale green color with a film thickness of 130 μm.

Example 19

The non-transparent blue powder paint (100 g) prepared in Referential Example 3 (1) and the yellow transparent powder paint (20 g) prepared in Referential Example 3 (2) were charged with a Henschel mixer and dry mixed for about 10 minutes. The resulting powder paint mixed uniformly was coated on a steel sheet by using an electrostatic spray gun. Then, the resulting mixed powder paint was baked at 180°C for 20 minutes. After the beginning of baking, the two different powder paints having different hues were gradually melted to form a coated film having a transparent deep green color with a film thickness of 70 μm.

Example 20

Using the non-transparent blue power paint (100 g) prepared in Referential Example 3 (1) and the yellow transparent powder paint (100 g) prepared in Referential Example 3 (2), the same method as in Example 19 was repeated to form a coated film having a transparent pale green color except that the thickness of the film after melting became 70 μm.

## Claims

**1.** A paint comprising:

(A) a polyester resin having a ratio of a hydroxyl value (OHV) to an acid value (AV), OHV/AV, of at least 1.2, said polyester resin being obtainable by polycondensing:

(i) a diol component of formula (1):

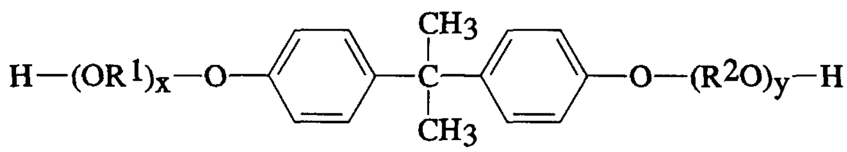

(1)

wherein each of $R^1$ and $R^2$, which may the same or different, represents an alkylene group having 1 to 6 carbon atoms, each of x and y is 0 or an integer of at least 1, and
x + y is an integer of 1 to 7,

(ii) a dicarboxylic acid, an acid anhydride thereof or an ester thereof of an alkyl group having 1 to 6 carbon atoms, and

(iii) a polycarboxylic acid having at least three valences, an acid anhydride thereof, an ester of an alkyl group having 1 to 6 carbon atoms, or a polyhydric alcohol having at least three valences;
and

(B) a coloring agent dispersed in the polyester resin.

**2.** A paint of claim 1, wherein the coloring agent comprises one or more of a cyan coloring agent, a magenta coloring agent and a yellow coloring agent.

**3.** A paint of claim 2, wherein the cyan coloring agent comprises a copper phthalocyanine pigment of formula (2):

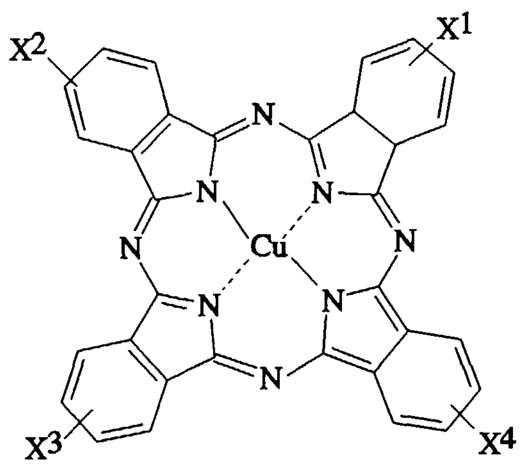

(2)

wherein each of $X^1$, $X^2$, $X^3$ and $X^4$, which may be the same or different, represents a hydrogen atom or a group expressed by the formula (3) or (4):

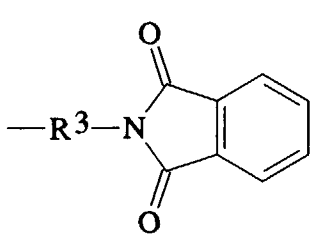

(3)

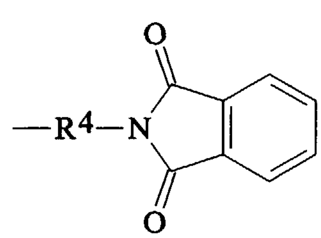

(4)

wherein $R^3$ and $R^4$, which may be the same or different, represent an alkylene group having 1 to 5 carbon atoms, at least one of $X^1$, $X^2$, $X^3$ and $X^4$, which may be the same or different, represents a group expressed by general formula (4) or (4); and/or

the magenta coloring agent comprises a quinacridone pigment expressed by the general formula (5):

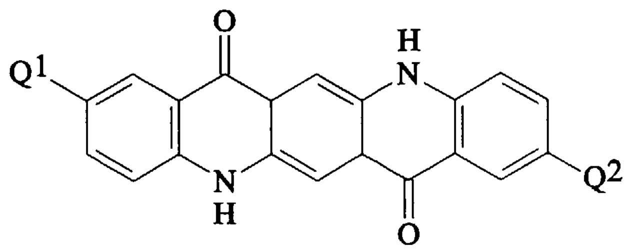

(5)

wherein each of $Q^1$ and $Q^2$, which may be the same or different, represents a hydrogen atom, an alkyl group or an alkoxyl group, and at least one of $Q^1$ and $Q^2$ is an alkyl group or an alkoxy group; and/or

the yellow coloring agent comprises a bisazo pigment of formula (6):

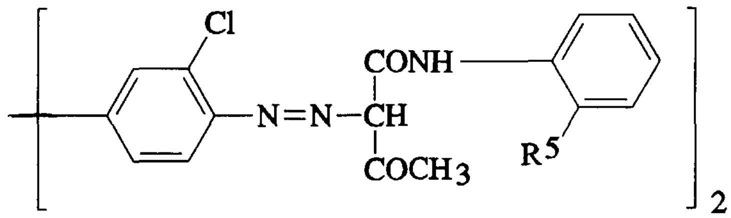

(6)

wherein $R^5$ represents a hydrogen atom, an alkyl group or an alkoxyl group; and/or

the yellow coloring agent comprises a benzoimidazolon pigment of formula (7):

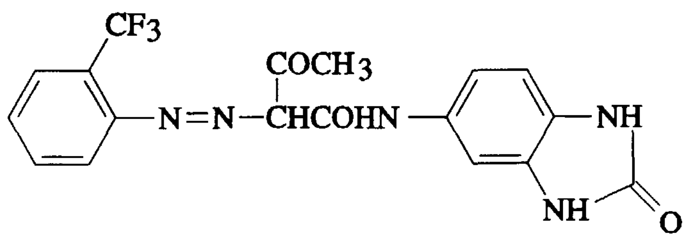

(7)

; and/or the yellow coloring agent is an isoindolin pigment of formula (8):

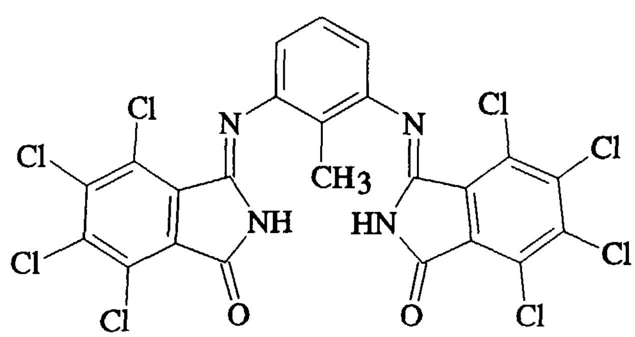

(8)

; and/or

the yellow coloring agent is a fused azo pigment of formula (9):

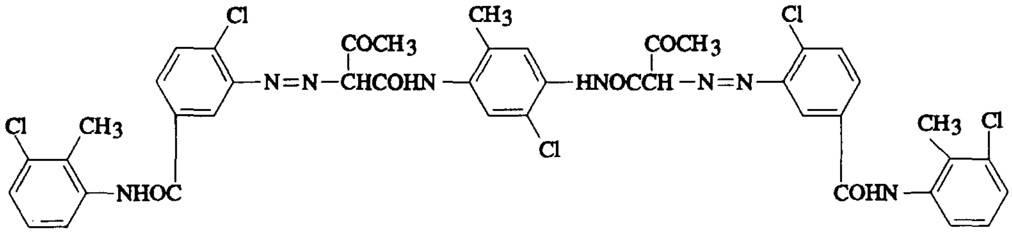

(9)

4. A paint of claim 1, 2 or 3, wherein a positive charge controlling agent and a negative charge controlling agent are dispersed in the polyester resin.

5. A paint of claim 4, wherein the positive charge controlling agent comprises a quaternary ammonium salt; and/or the negative charge controlling agent comprises at least one of: aromatic oxycarboxylic acids, salts thereof, aromatic dicarboxylic acids and salts thereof.

6. A paint according to any preceing claim, that is substantially free of opaque material and that is transparent.

7. A paint according to any preceding claim, in powder form.

8. A method of forming a paint, which comprises dry-blending:

(a) a first powder paint that may be transparent or non-transparent; and
(b) a second powder paint that is of different color from the first paint and that is a transparent powder paint.

9. A method according to claim 8, wherein the electric conductivities of the first and second paints differ from one another by a factor of 2 or less.

10. A method according to claim 8 or 9, wherein the dry-blending additionally involves a third powder paint, the third powder paint being a transparent powder paint, and the three powder paints being variously magenta, yellow and cyan.

11. A method according to any of claims 8 to 10, which additionally comprises adding to one or more of the first, second and third powder paints before dry-blending thereof an electroconductive powder thereby reducing a difference in electrical conductivity between them.

12. A method according to any one of claims 8 to 11, wherein the first powder paint is non-transparent and wherein the transparent powder paint has a particle diameter of 1/2 or less of that of the non-transparent powder paint.

13. A method of coating a material, which comprises:

(a) applying to the material a first paint that may be transparent or non-transparent; and
(b) applying to the first paint a second paint that is of different color to the first paint and that is a transparent powder paint.

14. A method according to claim 13, which additionally comprises:

(c) applying to the second paint a third paint that is a transparent powder paint;
the three paints being variously magenta, yellow and cyan.

**15.** A method according to any one of claims 8 to 14, in which the paint that is dry-blended or as the case may be the paint that is applied is a paint according to any of claims 1 to 7.

**16.** A method of coating a material, which comprises:

(a) a method according to claim 13 or 14; or
(b) applying to the material a paint formed by a method according to any one of claims 8 to 12;
wherein the paint that is applied to the material is applied electrostatically.

**17.** A polyester having a three-dimensional network structure and having:

OHV/AV equal to at least 1.2;
where OHV is the hydroxyl value of the polyester, and AV is the acid value of the polyester.

**18.** A polyester according to claim 17, which includes:

(i) repeat units derivable from a diol component of formula (1):

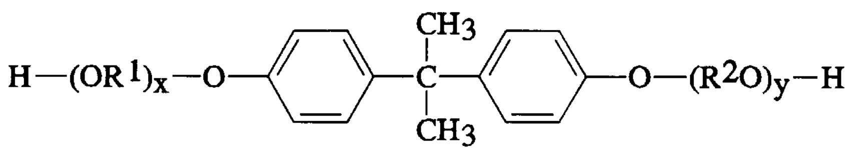

(1)

wherein each of $R^1$ and $R^2$, which may the same or different, represents an alkylene group having 1 to 6 carbon atoms, each of x and y is 0 or an integer of at least 1, and
x + y is an integer of 1 to 7; and optionally
(ii) repeat units derivable from a dicarboxylic acid, an acid anhydride thereof or an ester thereof of an alkyl group having 1 to 6 carbon atoms, and optionally
(iii) repeat units derivable from a polycarboxylic acid
having at least three valences, an acid anhydride thereof, an ester of an alkyl group having 1 to 6 carbon atoms, or a polyhydric alcohol having at least three valences.

**19.** The use of a polyester according to claim 17 or 18 as a binder for a transparent powder paint.

**20.** A transparent powder paint, which comprises a coloring agent and a binder, the binder consisting substantially entirely of one or more polyesters according to claim 17 or 18.

FIG. 1a

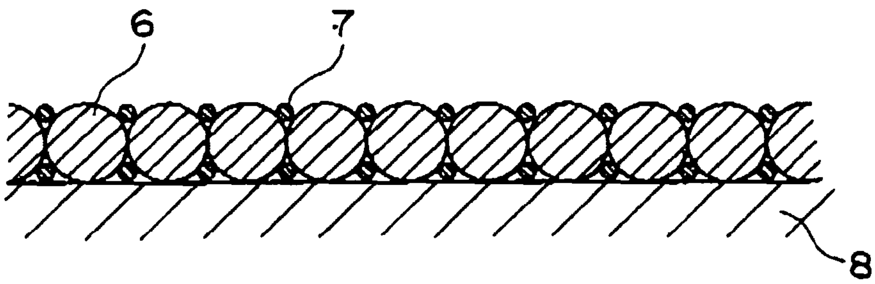


FIG. 1b

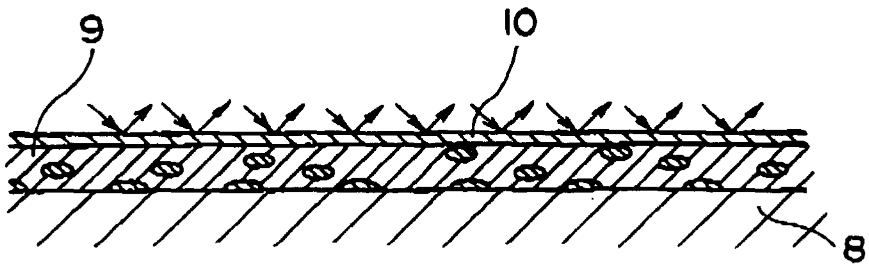

FIG. 2a

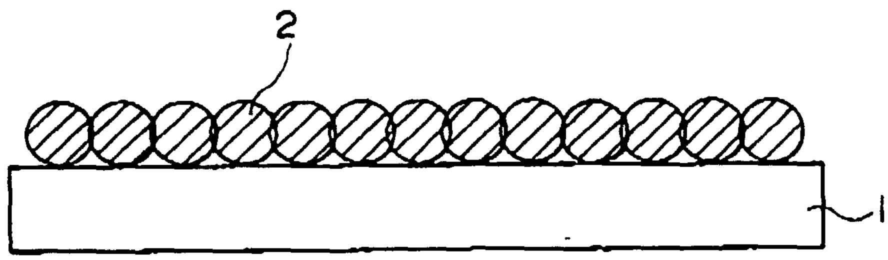


FIG. 2b

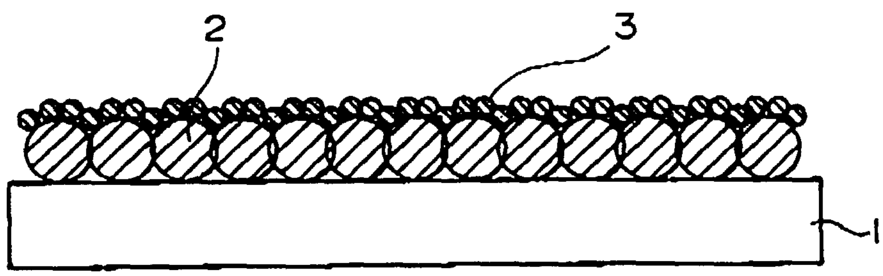


FIG. 2c

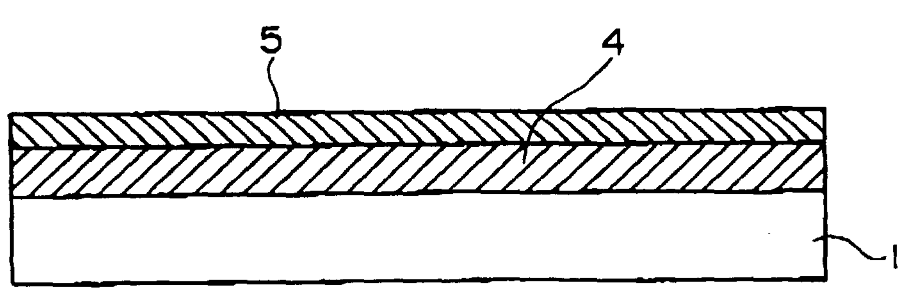

FIG. 3

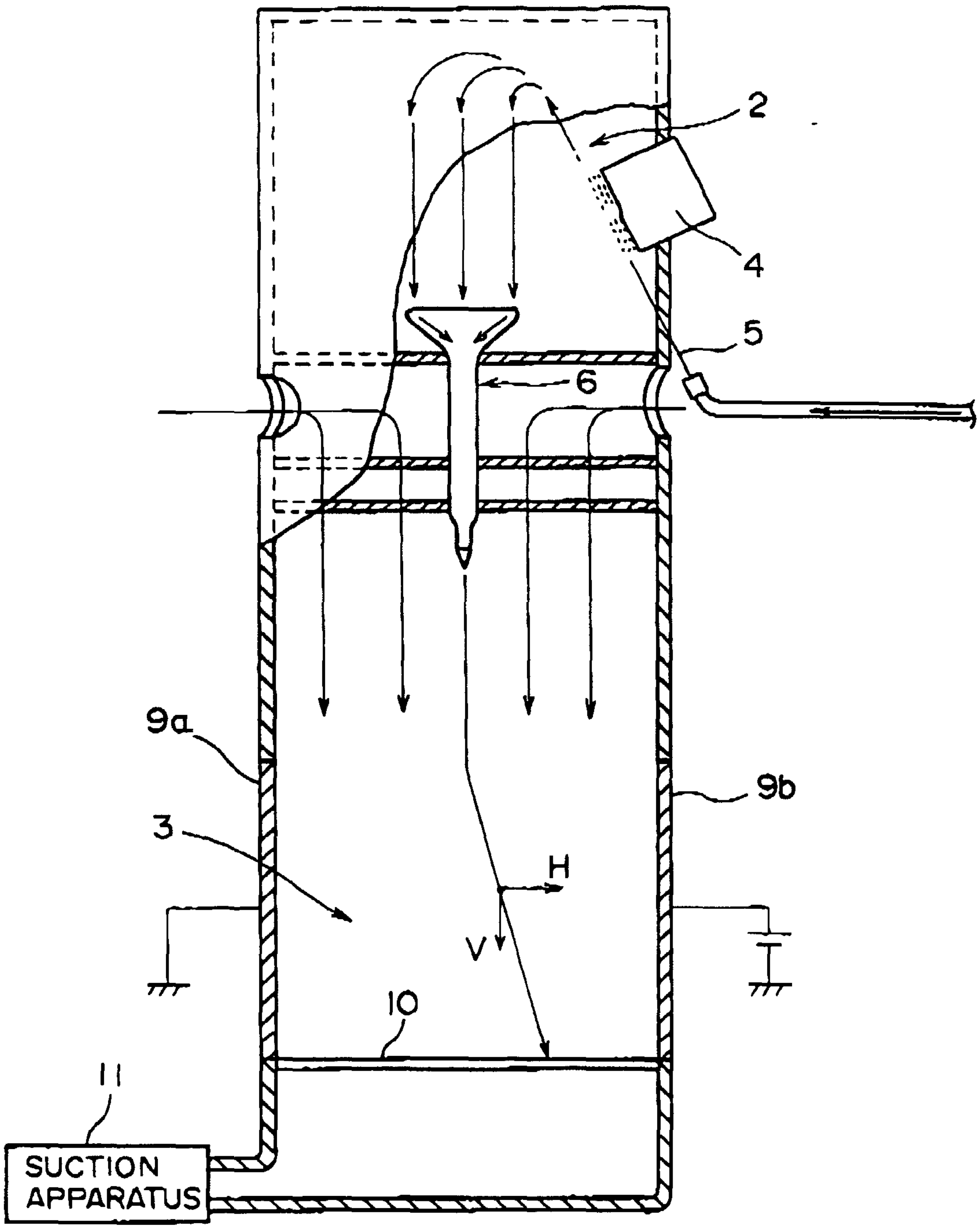

FIG.4

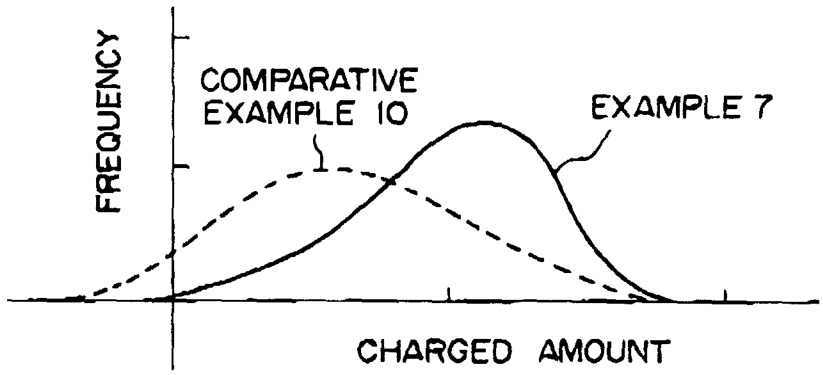


FIG.5

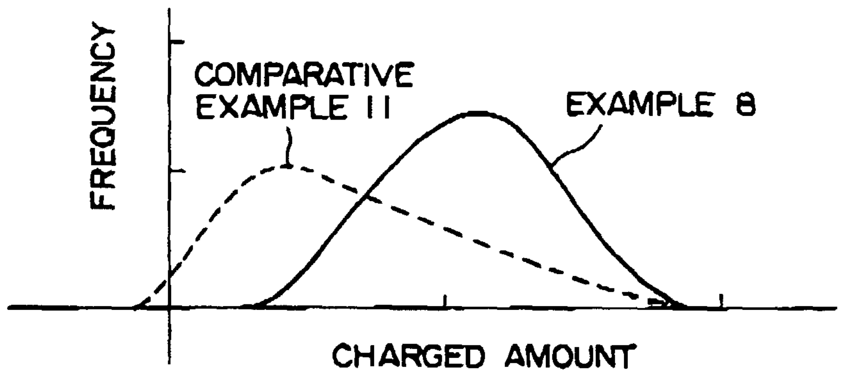


FIG.6